# EUROPEAN PATENT SPECIFICATION

(11) **EP 1 814 761 B1**
(45) Date of publication and mention of the grant of the patent: **15.01.2014**
(21) Application number: 05804701.0
(22) Date of filing: 22.11.2005
(51) Int. Cl.: B60R 5/04, B60P 3/14, B60P 7/08, B60R 11/06

(54) **FASTENING DEVICE FOR WORKING EQUIPMENT IN A VEHICLE**
BEFESTIGUNGSVORRICHTUNG FÜR ARBEITSAUSRÜSTUNG IN EINEM FAHRZEUG
DISPOSITIF DE FIXATION POUR EQUIPEMENT DE TRAVAIL DANS UN VEHICULE

(30) Priority: 25.11.2004 SE 0402881
(43) Date of publication of application: 08.08.2007
(73) Proprietor: Modul-System HH AB, 431 22 Mölndal (SE)
(72) Inventor: CARLSSON, Anders, S-422 50 Hisings Backa (SE); SEIDEL, Henrik, S-443 39 Lerum (SE); ROCHA DA FONSECA, Serge, 33500 Libourne (FR)
(74) Representative: Somlo, Tommy
(86) International application number: PCT/SE2005/001743
(87) International publication number: WO 2006/057596

(56) References cited:
- EP-A1- 0 424 650
- WO-A1-93/12026
- FR-A1- 2 620 665
- GB-A- 1 238 247
- GB-A- 1 238 247
- JP-A- 10 024 763
- US-A- 4 469 257
- US-A- 4 469 257
- US-A- 6 139 235
- US-A- 6 139 235

## Description

The invention relates to an arrangement for fastening working equipment to a floor in a van, minibus, delivery van or the like vehicle. The device relates to a particular design of a bracket plate which is used for fastening of the equipment at its points of fixation to the floor. This kind of fixation device is particularly useful for fixation of equipment in vans intended to be used for professional use by craftsmen such as for example plumbers, electricians or painters.

### BACKGROUND ART

To equip vans with equipment in the form of cupboards, tool holders, shelves and the like equipment is common practice today. In most cases is this operation made in a separate step when the vehicle is already manufactured and sold to the customer, i.e. the equipping of the car is made separately from the manufacturing of the car. Before the car is equipped with the specialised equipment, it is common practice to provide the cargo space of the vehicle with an inner floor, usually made of wood, but the floor might also be made of for example an artificial, plastic material. This floor functions as a good support to work, stand and walk upon and is also used as an anchor plate for the equipment. The equipment may be attached directly to the original floor of the cargo space but because such a fixation often leads to a boring through the floor for screwing on the equipment to the floor, such a fixation may result in that the layer of corrosion protection is damaged. An action of rust on the floor may on one hand result in shorter length of life of the vehicle itself and on the other hand result in weakening of the fixation due to the damages of rust. It is therefore important to provide the vehicle with an inner floor to which the equipment may be fastened, by for example being screwed on, without risking negative effects of the frame-work of the vehicle. The inner floor may for example be fastened to the vehicle by gluing and/or by being screwed onto angle bars which are fixed to the frame-work of the vehicle at such devices as ring fasteners in the cargo space of the van.

GB 1238247 discloses a rope lashing anchorage for fitting to a floor of a freight container.

The equipment is usually attached to the vehicle partly to the floor and partly to the wall. The fixation at the wall has as its main purpose to counteract that the equipment tip over at swaying in the vehicle, for example when the vehicle turns. For other purposes, the fixation to the floor composes the most important fixation of the equipment to the vehicle and it is principally the floor fixation which prevents the equipment from being displaced at for example braking or accelerations. A situation which means extraordinary stresses for the fixation is a collision situation. At a head-on collision the floor will be the subject of a force from the equipment which is directed forward and upwards. In this situation, it is important on the one hand that the inner floor is readily fastened to the frame-work of the vehicle and on the other hand that the equipment is adequately fastened to the floor. The equipment which is present in working vehicles is usually rather heavy, in particular when they are equipped with those tools and material which are included in the toolkit of the professionals. In this case, it is a safety risk if the equipment is detached and thus may move forward having a large force which in the worst scenario may break through into the driver cabin and thereby causing personal injuries. It is also desirable that the equipment shall be fastened as rigidly as possible in order to avoid damage on the cargo space of the vehicle and those tools and material which are stored there.

In the vans of today which are provided with working equipment, such as described above, are these indeed fastened to the floor but tests has shown that the equipments, at sudden accelerations respectively braking, may detach and thus cause large damages, personal as well as material. Hence, there is still remaining a need for an improved method and improved arrangement for fastening equipment to the cargo space in a vehicle.

### DESCRIPTION OF THE INVENTION

The invention relates to a fastening device for working equipment in the back or the cargo space in a vehicle, said equipment comprising points of attachment, said points of attachment intended to be fastened to an inner floor in the vehicle, said inner floor fixed to the frame-work of the vehicle and provided with holes for fixation of said equipment comprising said points of attachment and being located on top of the inner floor, the fastening device further comprising a bracket plate, provided with fixation points, located on the underside of the floor and adapted to fit in the fixation points with the holes in the inner floor and to the points of attachment of the equipment. The device is characterised by the bracket plate being provided with at least two fixation points intended to be used for fixation of the bracket plate to the points of attachment of the equipment.

An arrangement according to the fastening device specified in claim 1 will thus increase the ability of the fixation to retain the equipment even at great stress forces. A particular problem which earlier has occurred and which to a large extent has been reduced by the inventive arrangement is that the equipment has detached in case of collisions. The fixation devices which earlier has been used has many times turned out to be unsatisfactory why crack formations has arisen in the floor and a subsequent detachment of the fixation. In this case is it in particular the force directed upwards which causes a problem and is the reason for the equipment loosing its attachment. The problem with crack formation is particularly relevant when the equipment is attached near the edges of the inner floor. However, there is a wish due to the reason of space to locate the equipment at the wall of the van and, thus, at the edges of the floor. The solution to the problems related to crack formation and a subsequent breakthrough of the bracket plates is achieved by the arrangement described in claim 1. The solution is partly based on that these bracket plates are generally larger than those being used earlier, but the main effect arises from the brackets being fixed to the floor at more than one location. In this way will the stress forces be redistributed from being concentrated to one point to be distributed to at least two points which is of crucial importance. Hence, it is not the case that an increased surface area of the bracket plates, which at a quick glance may be considered as the obvious solution, may fully compensate for the effect which fixation at several points contributes with.

The effect of decreased crack formation by fastening a bracket plate at two different points of attachment is considered to start to show a detectable effect at a distance of 10 cm. The effect increases considerably if the distance between the most distant holes of fixation in the bracket plate is at least 20 cm. The effect is depending of which material that is used and it is possible that this effect may arise at shorter or longer distances than the ones described herein. It is of course possible to place further fixation holes between the most distant holes in bracket plate. To place a multitude of holes in the bracket plate with a relatively short distance in between will indeed entail that there are more points which may absorb stress forces but if these points are positioned to close to each other there is a risk of crack formations from two points of fixation may cooperate and in that way weaken the fixation. By experimenting it will be possible to decide the distance between the points of fixations, for different material, so as these do not may cooperate in a negative way.

Depending on in which directions large stress forces of the fixation is expected, the bracket plates may be oriented and designed so as to achieve most possible security concerning a secure fixation.

As earlier mentioned, also the total area of the bracket plates is of interest. Preferably is its total area more than 50 cubic centimetres, even more preferred more than 150 cubic centimetres and most preferably more than 210 cubic centimetres. The width of the bracket plates should be at least 3 centimetres, even more preferred 5 centimetres and most preferably more than 7 centimetres while its length should be at least 12 centimetres, even more preferred 22 centimetres and most preferably more than 30 centimetres. Concerning the width of the bracket plate, it shall be wide enough so that the bracket plate not runs the risk of cutting through the floor and concerning the length it shall be long enough so that the desired effect of distribution of the work of the forces between the fixation points will be achieved.

By working equipment is meant different kinds of extra equipment which not is fixed to the vehicle as standard equipment when it is delivered from the factory but is mounted afterwards. In addition to the equipment described in the examples such as shelves, boxes, filing cabinets may it for example comprises net, tool boards, slide bars, partition walls, anchor rings or the like devices which are attached to the inner floor.

By fastening devices of the equipment is meant arrangements which are intended to be used for fastening the equipment to the vehicle. These fastening devices may either be fabricated as an integrated part of the equipment, for example pre fabricated fixation arrangement in the form of holes underneath, or separately manufactured devices like the angle bars shown in the examples which are mounted onto the equipment afterwards. There are within in the scope of performing the invention several possibilities for the skilled person in the art to design specific fastening devices depending on which kind of equipment that shall be attached to the floor.

In those cases directions or positions are denoted as backwards or at the rear end respectively forward or at the front part it relates to directions or positions in view of the vehicle to which the floor is attached. Concerning the inner floor in the vehicle, it is considered to include a naturally defined upper side facing upwards towards the cargo space and an under side pointing downwards away from the cargo space. In those cases the upper side or under side respectively under and on top of is present in the description without further definitions, it relates to the same directions which as stated for the floor.

### BRIEF DESCRIPTION OF THE DRAWINGS

- Figure 1:: Example of typical equipment for which the attachment device is intended to work.
- Figure 2:: Detail of working equipment provided with angle bars as fastening device
- Figure 3:: Fixation device according to an embodiment of the invention
- Figure 4:: Bracket plate according to an embodiment of the invention
- Figure 5:: Different placements of bracket plates under the floor in the cargo space on a van
- Figure 6:: Examples of different geometric shapes of bracket plates

### EMBODIMENTS OF THE INVENTION

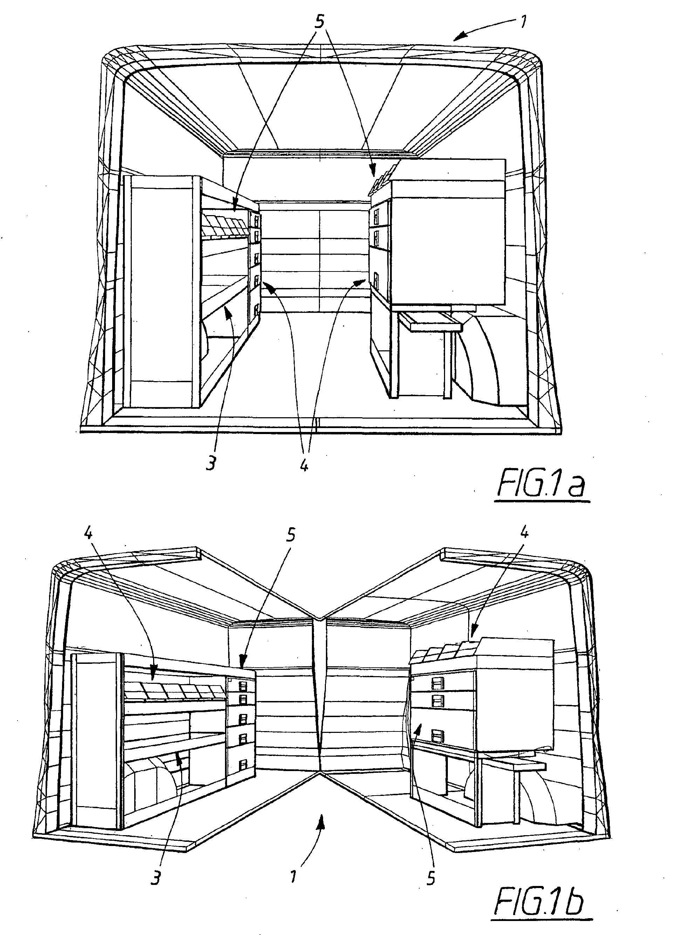

In fig. 1a and 1b is shown the cargo space 1 of a vehicle of the van type as seen from the rear end. In figure 1b, the cargo space 1 has been divided along a central line along the extension of the cargo space in the longitudinal direction of the van so as to separate the rear end of the cargo space in order to visualise the equipment in the cargo space. Figure 1b is thus only a drawing which only is enclosed in order to more efficient visualise how the equipment in the cargo space 1 of a van may look like. In the occurring case, the equipment consists of shelves 3, open storage boxes 4 and a chest of drawers 5.

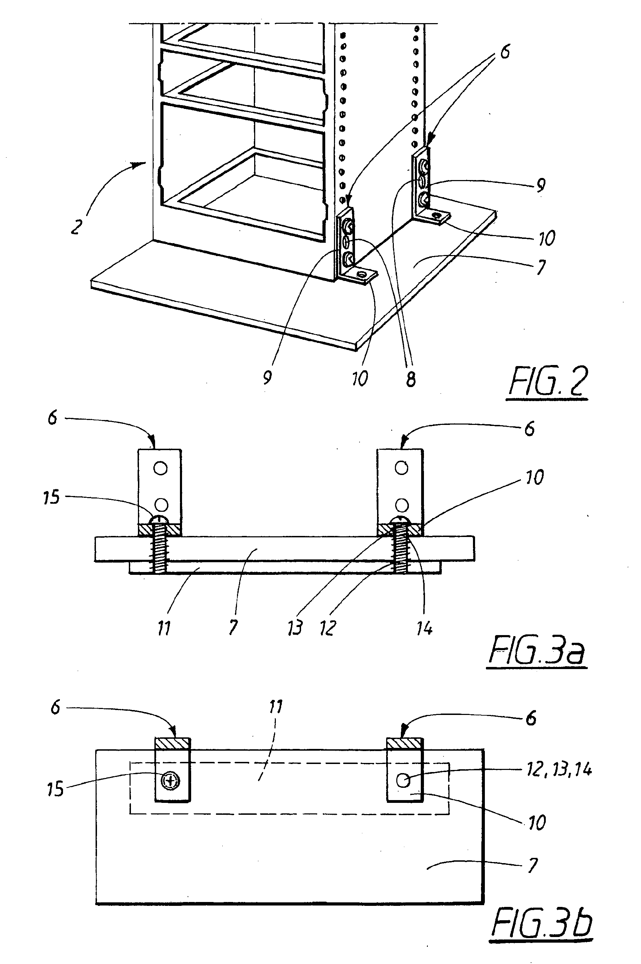

In figure 2, it is shown that angle bars 6 are used for fastening the equipment 2 to the inner floor 7 of the cargo space 1 of the van, The angle bar 6 is provided with holes 8 by which it is fixed with its fixation part 9 to the equipment so that the attachment part 10 of the angle bar is placed in an essentially horizontal plane parallel with and on top of the floor plate 7.

In figure 3, it is shown how the fixation device is constructed. In figure 3a, a cross sectional view, perpendicular to the plane of the floor, of the fixation device is shown and in figure 3b, a view from above, parallel to the plane of the floor, of the fixation device is shown. These figures only illustrates schematic drawings showing the principle of how the fixation is intended to work and do not claim that it illustrates proportional dimensions of the components forming part of the fixation.

I figure 3, it is shown that the angle bars 6 are set out and fixed to the equipment (not shown) at an appropriate distance in order to fit in with a bracket plate 11, which is provided with holes 12, so that the holes 12 of the bracket plate fits in with holes 13 located in the attachment part 10 of the angle bar. Furthermore, the floor 7 has been provided with holes 14 which also are adapted to fit with the holes 12 of the bracket plate and the holes 13 in the attachment part 10 of the angle bar 6. Preferably are the holes 12 of the bracket plate threaded so that a screw 15 may fasten the angle bars 6 to the floor 7 by being screwed onto the bracket plate 11.

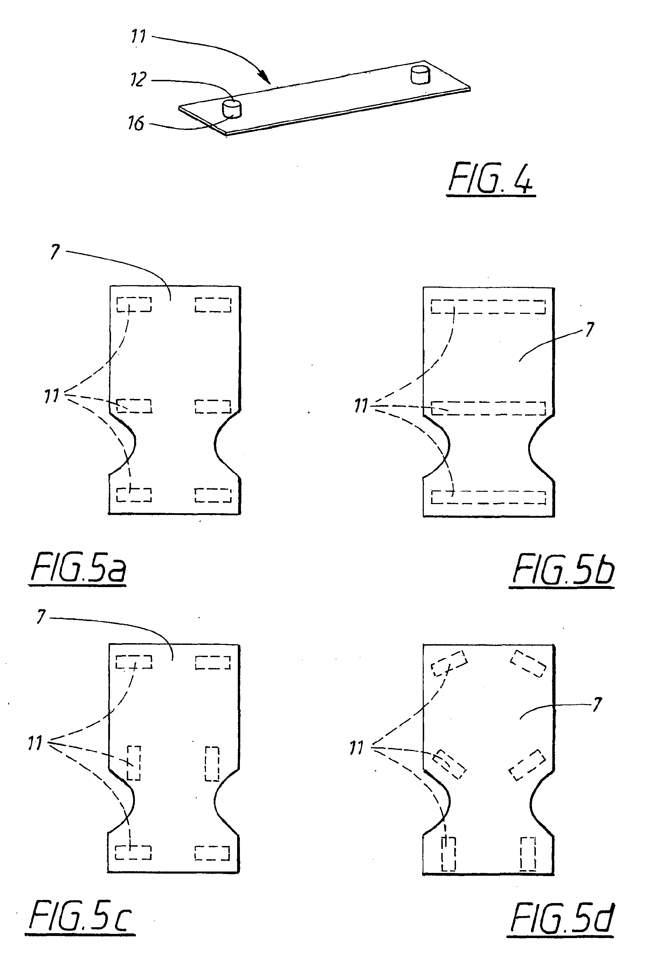

I figure 4 is shown a more detailed drawing of a bracket plate 11 according to an embodiment of the invention. The bracket plate 11 has been provided with two holes 12 which on one side of the bracket plate are provided with projecting sleeves 16 integrated in the bracket plate 11. The size of the sleeves 16 is adapted to fit in the holes which have been bored in the floor and are, when attaching the angle bars to the bracket plate 11, protruding into the holes in the floor plate 7. The bracket plate 11 is screwed together with the angle bars 7 by a screw which is threaded from above through the holes 13 of the attachment parts 10 and the holes 14 in the floor plate 7 and is screwed onto threads on the inside of the holes 12 and the sleeves 16 on the bracket plate 11.

The dimensions of the bracket plate is depending to a great extent of which kind of material that is used for the floor and the bracket plate together with the kind of equipment which shall be fastened. For fixation of equipment which shall carry relatively heavy working accessories the appropriate dimensions of the bracket plate may be at least 10 cm in the length direction, preferably between 30 and 50 cm; 3- 20 cm in the width direction, preferably 5-10 cm; and a thickness of 0,5 - 5 mm, preferably 1,5-4 mm. The thickness of the bracket plate may vary widely depending on which material that is used and in those cases steel above certain strength are used, the thickness may be reduced. The bracket plates may also be made of other material than steel and or metal alloys. Furthermore, these dimensions described shall not be considered as limiting for the invention. It is considered obvious that the making of the bracket plates over-dimensioned will lead to the desired effect but the size of the bracket plates should be limited partly due to material costs and partly due to that they may be cumbersome to handle. Dimensioning of the bracket plates is indeed important but since they shall be used for a multitude of different kind of equipment of different weights and, in addition, in most cases cooperate with other fixation devices, it is difficult to state specific, general measures so the bracket shall be dimensioned for each specific application.

I figure 4, it is exemplified a preferred embodiment of the invention. It is of course possible for the skilled person in the art to modify the design of the bracket plate within the scope of the invention by for example providing the bracket plate with a plurality of holes located in between which also are used for fixation of the equipment in a van. An essential feature of the inventive idea is that the holes on the bracket plate which are spaced apart at its most have a certain minimum distance between each other.

It is neither necessary to provide bracket plates with sleeves. The holes in the bracket plate do not need to be through going but may be formed of threaded indentations. It is also possible, instead of the use of holes, provide the bracket plate with screw stems fixed on the bracket plate which may be provided with threads. The screw stems may be threaded through the holes in the floor and in the fastening device of the equipment in order to be fastened with a nut on top of the fastening device of the equipment. The skilled person in the art will also realise that it is possible to let the fixation device of the equipment be made of a screw stem which is threaded through the holes in the floor and the bracket plate in order to be fastened with a nut on the underside of the bracket plate. There are thus a number of different ways of how the skilled person in the art may fasten the bracket plate to the fastening device of the equipment by riveting together or using a screw or bolt like element stretching through a hole in the floor and be fastened at its ends to the bracket plate and to the fastening device of the equipment.

Further on, it is not necessary that it is the same entity of equipment which is fixed to a bracket plate. Hence, a bracket plate may be attached to two different entity of equipment whose points of fixation are located at a certain minimum distance.

I figure 5, it is shown different placements of bracket plates 11 on an inner floor 7 in a van. The inner floor has been drawn in a shape with a contour in order to fit in a van with cuts for the rear wheel housings. The placement of bracket plates as shown in figure 5a is an adequate embodiment for the example of equipment as is shown in figure 1. In this example, the equipment is fastened at each long side of the floor with rectangular bracket plates extended in its length direction perpendicular to the length direction of the floor whereby two are located in front of the cut outs of the wheeling houses and one is located at the back of the same. In 5b, it is shown a further embodiment in which the bracket plates, which in figure 5a were located opposite to each other along a central line extending in the longitudinal direction of the vehicle, have been replaced with bracket plates extending essentially the whole width of the vehicle. In figure 5c, has two of the bracket plates been located to the floor so that their longitudinal extension is parallel to the longitudinal extension of the car. By placing bracket plates in such a way that their longitudinal extension is oriented in different directions, the attachment may be adapted to be particularly resistant in different directions. In figure 5d is thus shown further possibilities of how to orientate bracket plates in different ways.

In the examples shown in figure 5, the bracket plates has been located so that the points of fixation of the equipment are presumed to be located at essentially the same place in all the different examples. The skilled person in the art will realise that the points of fixation may be located at almost any spots where it is desired that the equipment shall be attached to the floor.

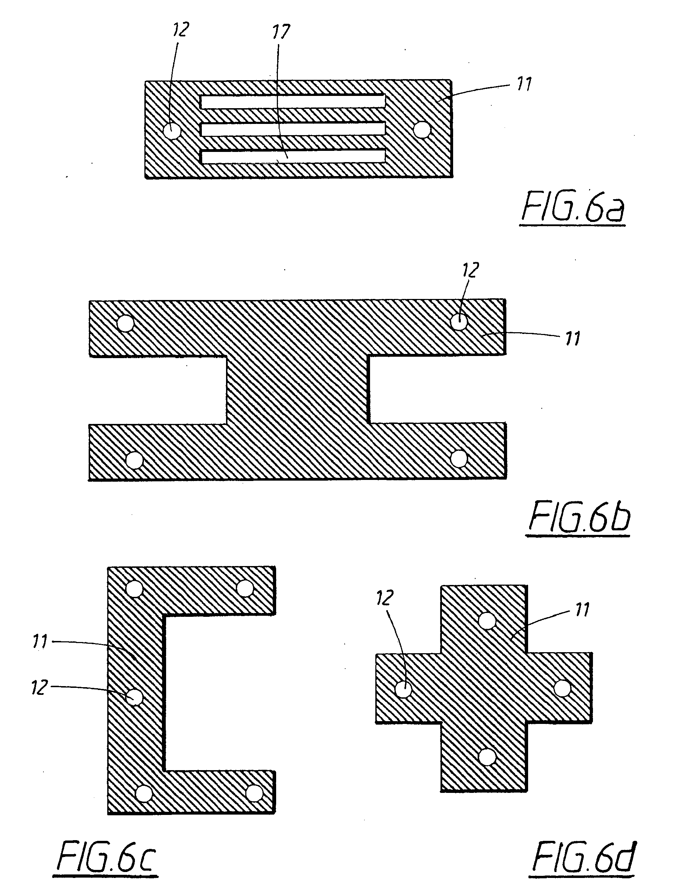

In the embodiments shown until here, the bracket plates have been exemplified as rectangular plates. In figure 6 it is shown some possible, alternative embodiments of bracket plates 11 provided with holes 12 as examples of fixation devices. By experimenting with different geometries, bracket plates which may save material and/or give rise to improved strength of the fixation can be obtained. The holes 12 may of course be replaced with threaded stems or bolts firmly welded onto or cast in one piece with the bracket plate.

## Claims

1. Fastening device (6,11) for a working equipment (2,3,4,5) in a cargo or back space (1) in a vehicle, said equipment (2,3,4,5) comprising points of attachment (13), said points of attachment (13) intended to be fastened to an inner floor (7) in the vehicle, said inner floor (7) is fixed to the frame-work of a vehicle and provided with holes (14) for fixation of said equipment (2,3,4,5), which is provided with points of attachment (13), and is located on top of the inner floor, the fastening device (6,11) further comprising a bracket plate (11), provided with fixation points (12), located on the underside of the floor (7) and adapted to fit in with the holes (14) in the inner floor (7) and to the points of attachment (13) of the equipment, wherein the bracket plate (11) is provided with at least two fixation points (12) intended to be used for fixation of the bracket plate (11) to the attachment points (13) of the equipment **characterised in that** the fixation points (12) of the bracket plate (11) is provided with threaded sleeves (16) adapted to fit in holes (14) in the inner floor (7) and be fastened to a mounting screw (15) which is threaded through the holes (14) in the floor (7) and in the attachment points (13) of the equipment in order to be screwed onto the threaded sleeve (16).

2. A device according to claim 1, **characterised in that** the distance between 2 of the fixation points (12) in the bracket plate (11) exceeds 10 cm.

3. A device according to claim 2, **characterised in that** the distance between at least 2 of the fixation points (12) exceeds 20 cm.

4. A device according to anyone of the preceding claims **characterised in that** the surface of the bracket plate (11) exceeds 50 cm².

5. A device according to claim 4, **characterised in that** the surface of the bracket plate (11) exceeds 150 cm².

## Patentansprüche

1. Befestigungsvorrichtung (6, 11) für Arbeitsausrüstung (2, 3, 4, 5) in einem Last- oder Hinterraum (1) eines Fahrzeugs, wobei die Ausrüstung (2, 3, 4, 5) Punkte (13) zur Befestigung aufweist, wobei die Punkte (13) zur Befestigung für eine Befestigung an einem Innenboden (7) im Fahrzeug vorgesehen sind, wobei der Innenboden (7) am Rahmen eines Fahrzeugs befestigt und mit Löchern (14) zur Befestigung der Ausrüstung (2, 3, 4, 5) versehen ist, welche Punkte (13) zur Befestigung aufweist und welche oben auf dem Innenboden angeordnet ist, wobei die Befestigungsvorrichtung (6, 11) ferner eine Halteplatte (11) aufweist, und wobei die Befestigungspunkte (12), auf der Unterseite des Bodens (7) angeordnet sind und ausgeführt sind, um in die Löcher (14) des Innenbodens (7) und den Punkten (13) zur Befestigung der Ausrüstung zu passen, wobei die Halteplatte (11) wenigstens zwei Befestigungspunkte (12) aufweist, die vorgesehen sind, um für ein Befestigen der Halteplatte (11) an den Befestigungspunkten (13) der Ausrüstung angewendet zu werden, **dadurch gekennzeichnet, dass** die Befestigungspunkte (12) der Halteplatte (11) Gewindehülsen (16) aufweist, die ausgeführt sind, um in Löcher (14) im Innenboden (7) zu passen und an einer Montageschraube (15) befestigt zu werden, die durch die Löcher (14) des Bodens (7) und in die Befestigungspunkte (13) der Ausrüstung eingedreht wird, um auf die Gewindehülse (16) geschraubt zu werden.

2. Vorrichtung nach Anspruch 1, **dadurch gekennzeichnet, dass** der Abstand zwischen zwei Befestigungspunkten (12) in der Halteplatte (11) größer ist als 10 cm.

3. Vorrichtung nach Anspruch 2, **dadurch gekennzeichnet, dass** der Abstand zwischen wenigstens zwei Befestigungspunkten (12) größer ist als 20 cm.

4. Vorrichtung nach einem der vorhergehenden Ansprüche, **dadurch gekennzeichnet, dass** die Fläche der Halteplatte (11) größer ist als 50 cm².

5. Vorrichtung nach Anspruch 4, **dadurch gekennzeichnet, dass** die Fläche der Halteplatte (11) größer ist als 150 cm².

## Revendications

1. Dispositif de fixation (6, 11) pour un équipement de travail (2, 3, 4, 5) dans un cargo ou un espace arrière (1) dans un véhicule, l'équipement (2, 3, 4, 5) comprenant des points d'attachement (13), les points d'attachement (13) étant destinés à être fixés à un plancher intérieur (7) dans le véhicule, le plancher intérieur (7) étant fixé au châssis d'un véhicule et doté de trous (14) pour la fixation de l'équipement (2, 3, 4, 5) qui est doté de points d'attachement (13) et est situé au-dessus du plancher intérieur, le dispositif de fixation (6, 11) comprenant en outre une plaque de support (11), dotée de points de fixation (12), située sur la sous-face du plancher (7) et adaptée pour s'intégrer avec les trous (14) dans le plancher intérieur (7) et aux points d'attachement (13) de l'équipement, sachant que la plaque de support (11) est dotée d'au moins deux points de fixation (12) destinés à être utilisés pour fixer la plaque de support (11) aux points d'attachement (13) de l'équipement, **caractérisé en ce que** les points de fixation (12) de la plaque de support (11) sont dotés de manchons filetés (16) adaptés pour s'insérer dans les trous (14) dans le plancher intérieur (7) et pour être fixés sur une vis de montage (15) qui est filetée à travers les trous (14) dans le plancher (7) et dans les points d'attachement (13) de l'équipement afin d'être vissée sur le manchon fileté (16).

2. Dispositif selon la revendication 1, **caractérisé en ce que** la distance entre 2 des points de fixation (12) dans la plaque de support (11) est supérieure à 10 cm.

3. Dispositif selon la revendication 2, **caractérisé en ce que** la distance entre au moins 2 des points de fixation (12) est supérieure à 20 cm.

4. Dispositif selon l'une quelconque des revendications précédentes, **caractérisé en ce que** la surface de la plaque de support (11) est supérieure à 50 cm².

5. Dispositif selon la revendication 4, **caractérisé en ce que** la surface de la plaque de support (11) est supérieure à 150 cm².
